# EUROPEAN PATENT SPECIFICATION

(11) **EP 0 367 849 B1**
(45) Date of publication and mention of the grant of the patent: **17.02.1993**
(21) Application number: 88118571.4
(22) Date of filing: 08.11.1988
(51) Int. Cl.: C05B 7/00, C01B 25/28

(54) **A process for the production of granulated di-ammonium phosphate containing fertilizer**
Verfahren zur Herstellung von granuliertes Diammonphosphat enthaltenden Düngemitteln
Procédé de production d'un engrais granulaire contenant du phosphate diammonique

(43) Date of publication of application: 16.05.1990
(73) Proprietor: NORSK HYDRO A/S, 0257 Oslo 2 (NO)
(72) Inventor: Ivell, David, Ipswich, Suffolk IPE 7SX (GB)
(74) Representative: Huber, Bernhard, Dipl.-Chem.

(56) References cited:
- US-A- 3 351 453
- US-A- 4 758 261
- CHEMICAL ABSTRACTS, vol. 102, no. 26, July 1985, page 117, abstract no. 222787a, Columbus, Ohio, US; F.J. ROIG et al.: "Optimization of the production process of ammonium phosphates", & ING. QUIM. (MADRID) 1985, 17(190), 87-90
- CHEMICAL ENGINEERING, vol. 85, no. 22, 9th October 1978, pages 81-83; R.J. DANOS: "Pipe reactor making diammonium phosphate now"

## Description

The present invention relates to a process for the production of granulated di-ammonium phosphate containing fertilizer comprising ammoniation of phosphoric acid in a tubular reactor situated in a drier.

Conventional production of di-ammonium phosphate (DAP) comprises utilization of a tank reactor for the neutralization of phosphoric acid with ammonia. In order to minimize the water content in the slurry formed, which is then pumped to a granulator, the reactor is operated at a nitrogen (N): phosphorus (P) mole ratio of around 1.4, which is the most soluble point. Further ammoniation to an N:P mole ratio of 1.7-2.0 is carried out in the granulator. The main problem is associated with the large quantity of water required for the slurry fluidity (typically 18-20%) which results in a high recycle ratio requirement (typically 5-6:1) and high energy comsumption for drying and material handling.

In order to reduce the water content in the slurry, direct replacement of the conventional reaction tank by a tubular or pipe reactor has been tried. The use of a pipe reactor enables the slurry water content to be reduced to around 5%, and consequently reducing the recycle ratio to around 4:1. One problem, however, associated with such a process is that the quantity of heat being added in the granulator is such that the granulation temperature is raised significantly, and ammonia losses become problematical.

Spraying ammonium phosphate into the drier rather than the granulator in order to reduce the recycle ratio is described in US patent 3,348,938, which primarily relates to manufacture of NP/NPK containing ammonium nitrate and ammonium phosphate (other than DAP). This process is restricted to the composition of the slurry being sprayed into the drier being different to that of the material leaving the granulator. Generally ammonium phosphate with an N:P mole ratio of 1.6 and containing 10-15% water is the material sprayed into the drier.

US patent No. 4,604,126 also describes a process based on the principle of spraying ammonium phosphate in a drier. A tubular reactor is specified for the production of the ammonium phosphate to be sprayed in the drier. For the production of DAP, however, this patent is restricted to splitting the feed of phosphoric acid between the granulator and drier so as to remove sufficient heat from the granulator to prevent the problems related to loss of ammonia. Thus it is principally a two-stage process for manufacturing DAP.

The ammonium phosphate so formed is returned as recycle to the granulator where further ammoniation is carried out to raise the N:P mole ratio to 1.9-2.0:1. In this way, recycle ratio is reduced to around 3:1. The problem with this process is that the ammonium phosphate produced in the drier is essentially a fine mono-ammonium phosphate. A significant part of this material is recovered in the cyclones which are thus susceptible to blockages. A high degree of ammoniation is also required in the granulator to convert this MAP to DAP.

Utilization of tubular reactors is further known from US patent No. 4,134,750 relating to production of several types of fertilizers, for instance ammonium phosphate. This process comprises ammoniation in two stages as ammonia is fed both to the pipe reactor and the drum granulator to which the slurry from the pipe reactor is supplied. Thus the phosphoric acid is only ammoniated to an N:P mole ratio of 1.34:1 in the pipe reactor.

The object of the present invention was to obtain a simplified process having a low recycle ratio and low energy consumption.

The inventor considered the concept of placing a pipe reactor in the drier rather than the granulator to be quite promising in spite of the disadvantages discussed above for known processes of this type. The question was how to overcome these disadvantages and simultaneously retain the advantages related to application of pipe reactor in the drier. The inventor tried to simplify the process by feeding all the phosphoric acid and all the ammonia to the pipe reactor. It was then surprisingly found that it was possible to attain a reaction product having an N:P mole ratio of 1.82. The slurry thus produced had a moisture content of 3-10 weight per cent. The ammonium phosphate from the pipe reactor was sprayed on the surface of cascading solid particles in the drier to which was introduced a co-current stream of hot air. Part of the screened product from the drier was recycled, preferably to a granulator to which it only was necessary to add some steam to partially agglomerate the recycle particles. Minor amounts of ammonia and sulphuric acid could also be supplied to the granulator. By this simplification of the process it was found that DAP could be produced with the surprisingly low recycle ratio of less than 3:1. Further experiments showed that by feeding all the phosphoric acid and substantially all the ammonia to the pipe reactor it could be obtained a reaction product having an N:P mole ratio of 1.6-2.0:1. Typical recycle ratio would then be 2-2.5:1.

The scope of the invention and its characterizing features are as defined in the attached claims.

The invention will now be further explained in connection with the description of a simplified flow sheet for the process and the examples.

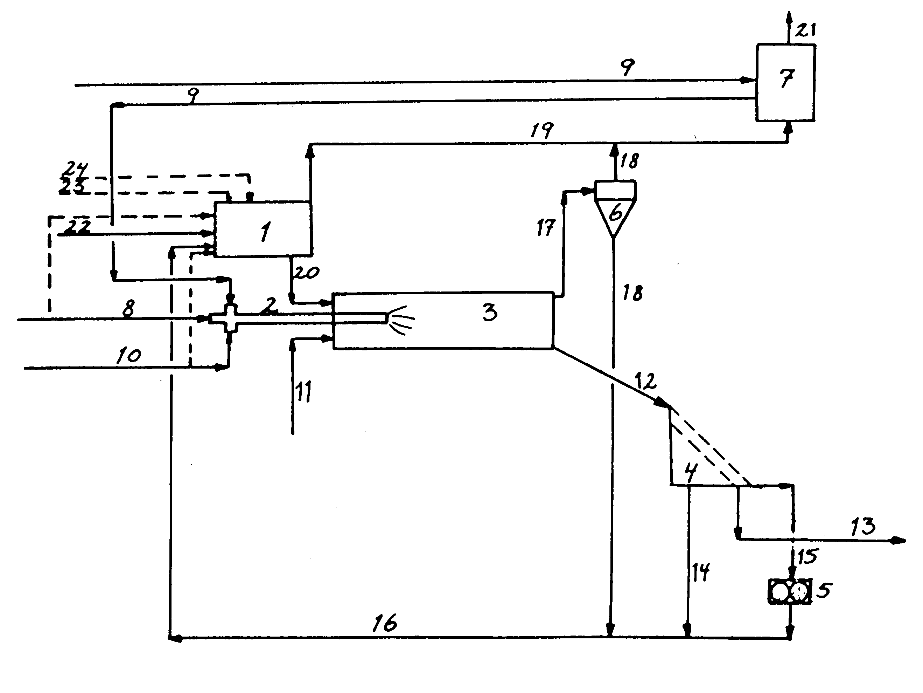

- Fig. 1: shows a flow sheet for a process according to the invention.

Fig. 1 shows the production of granular di-ammonium phosphate where the entire phosphoric acid requirement (typically 36-42 P₂O₅) is fed through line 9 via a scrubbing system 7 to a tubular reactor 2 which sprays into the inlet of a conventional flighted rotary drum drier 3. Substantially all of the required ammonia is supplied through line 8 to the tubular reactor 2. Some minor amounts of ammonia might also be supplied to a granulator 1 to which recycle DAP is supplied through line 16. Steam can be added through line 22 to the granulator 1 for partial agglomeration of the recycle particles.

Normally final product analysis is controlled using sulphuric acid and filler depending upon the phosphoric acid analysis. Filler may be supplied to the granulator 1 through line 16 together with the recyle particles. Sulphuric acid can be supplied through the line 10, mainly through the tubular reactor 2, but minor amounts may be supplied to a granulator 1. The agglomerates formed in the granulator 1 are supplied through line 20 to the drier 3. The design of the tubular reactor and the drier results in coating of the surfaces of the solid particles being cascaded in the drier by the ammonium phosphate produced in the tubular reactor. Drying is simultaneously carried out with a co-current stream of hot air supplied through line 11.

Effluent gases containing dust leave the drier 3 through line 17 to a cyclone 6. Dust separated in the cyclone 6 is transferred through line 18 to the recycle line 16. The affluent containing some ammonia leave the cyclone 6 through line 18 and further through line 19 to a scrubbing system for recovery of ammonia. The purified air leaves the scrubber 7 through line 21.

The granulated DAP leaves the drier 3 through line 12 to a screen 4 where it is separated into fines 14, oversize particles 15 and product particles 13. The oversize particles 15 are crushed in the pulverizer 5 and returned to the granulator 1. The product sized material 13 can be cooled in a conventional cooler (not shown) before being extracted from the plant.

In cases when other NP-fertilizers than DAP are to be made by the process according to the invention, urea can be supplied to the granulator 1 through line 23. NPK-fertilizer containing DAP can also be made by the present process. In that case potassium, for instance as KCl or K₂SO₄ salts, is supplied to the granulator 1 through line 24. Also for such processes the recycle ratio proved to be unusually low resulting in an over all low energy requirement.

### Example 1

This example shows manufacture of DAP according to the invention and where all the phosphoric acid and all the ammonia are fed to the tubular reactor. The nominal grade for this DAP (N:P₂O₅) should be 18:46.

Phosphoric acid having a P₂O₅ content of 35,9% was fed to the tubular reactor together with the required amount of anhydrous gaseous ammonia for obtaining the desired grade DAP.

### Conditions in the tubular reactor:

- Temperature:: 108°C measured as slurry charges from the pipe
- % H₂O :: 9.5
- N/P mole ratio:: 1.82

### Drier conditions:

- air inlet temperature :: 171°C
- air outlet temperature :: 92°C
- solids outlet temperature :: 77°C

The recycle ratio kg/kg product was 2.8.

Under these conditions 105 kg/h DAP was produced containing 17.4% N, 45.1% P₂O₅ and 1.18% H₂O. The N/P mole ratio was 1.77.

### Example 2

This example describes manufacture of DAP according to the invention, where 90-95% of the ammonia is supplied to the tubular reactor.

The phosphoric acid having a P₂O₅ content of 36.5% was supplied to the tubular reactor together with 90% of the required amount of anhydrous gaseous ammonia. The remaining amount of anhydrous gaseous ammonia was supplied to the granulator 1 together with recycle particles and steam. The agglomerate from the granulator was fed to the drier where the reaction product from the tubular reactor was sprayed on them.

### Conditions in the tubular reactor

- temperature :: 115°C
- % H₂O :: 8.9
- N/P mole ratio :: 1.64

### Conditions in the drier

- air inlet temperature :: 157°C
- air outlet temperature :: 94°C
- solids outlet temperature :: 77°C

recycle ratio kg/kg product: 1.7

By this process it was produced 103 kg/h DAP containing 17.8% N, 44.8% P₂O₅ and 1.33% H₂O.
N/P mole ratio was 1.75.

Further experiments showed that DAP could be manufactured according to the invention by ammoniating all the phosphoric acid in the tubular reactor to an N:P mole ratio of 1.6-2.0:1 using recycle ratio of 3-2:1.

By the present invention it has been obtained a one-step process for a production of DAP where all the phosphoric acid is fed via the tubular reactor in the drier. By operation at the above stated N:P mole ratio little or no further ammoniation was required in the granulator. Utilization of this basic principle for production of DAP can be extended to manufacture of other DAP containing fertilizers like NPK, and accordingly a most flexible process is obtained.

The present process does not require high temperatures in the drier and the ammonia losses there are thereby kept at a minimum, and ammonia from the granulator and drier can easily be recovered in a conventional scrubber. The low recycle ratio of this process and its simple layout results in a low heat consumption during drying and further handling of the solids. Thus the inventor has succeeded in providing a process which does not have the disadvantages of known processes, but comprises their positive aspects resulting from utilizing a tubular reactor in the drier.

## Claims

1. A process for the production of granulated diammonium-phosphate containing fertilizers comprising ammoniation of phosphoric acid in a tubular reactor situated in a drier, characterized in that all of the phosphoric acid and substantially all of the ammonia is fed via a tubular reactor feeding the drier and where the ratio of kg recycled material to kg product, the recycle ratio, is less than 3:1.

2. A process according to claim 1,
**characterized in that**
the phosphoric acid concentration is between 36 and 50% P₂O₅ and that the ratio between ammonia and phosphoric acid results in ammonium phosphate leaving the tubular reactor having an N:P mole ratio of 1.6-2.0:1.

3. A process according to claim 1 in which steam is added to the granulator to partially agglomerate the recycle particles.

4. Process according to claim 1,
**characterized in that**
small quantities of sulphuric acid and ammonia are fed to the granulator as known per se in order to control final product analysis.

5. Process according to claim 1,
**characterized in that**
the process is carried out in a combined granulator and drier comprising a tubular reactor for reacting ammonia and phosphoric acid to diammonium phosphate.

6. A process according to claim 1 characterized in that urea and/or a potassium source is supplied during a recycling step.

## Patentansprüche

1. Verfahren zur Herstellung von Düngemitteln, die granuliertes Diammoniumphosphat enthalten, umfassend die Ammonisierung von Phosphorsäure in einem Rohrreaktor, der sich in einem Trockner befindet, **dadurch gekennzeichnet,** daß die gesamte Phosphorsäure und im wesentlichen der gesamte Ammoniak dem Trockner über eine Rohrreaktor-Beschickungsvorrichtung zugeführt wird, wobei das Verhältnis von kg recyclisiertem Material zu kg Produkt, das Recyclisierungsverhältnis, geringer als 3:1 ist.

2. Verfahren nach Anspruch 1, **dadurch gekennzeichnet,** daß die Phosphorsäure-Konzentration zwischen 36 und 50 % P₂O₅ ist und daß das Verhältnis zwischen Ammoniak und Phosphorsäure ein den Rohrreaktor verlassendes Ammoniumphosphat mit einem N:P-Molverhältnis von 1,6-2,0:1 ergibt.

3. Verfahren nach Anspruch 1, bei welchem Dampf zum Granulator gegeben wird, um die Recyclisierungsteilchen teilweise zu agglomerieren.

4. Verfahren nach Anspruch 1, **dadurch gekennzeichnet,** daß kleine Mengen von Schwefelsäure und Ammoniak dem Granulator, wie an sich bekannt, zugeführt werden, um die Endproduktanalyse zu kontrollieren.

5. Verfahren nach Anspruch 1, **dadurch gekennzeichnet,** daß das Verfahren in einem kombinierten Granulator und Trockner durchgeführt wird, der einen Rohrreaktor zur Reaktion von Ammoniak und Phosphorsäure zu Diammoniumphosphat enthält.

6. Verfahren nach Anspruch 1, **dadurch gekennzeichnet,** daß Harnstoff und/oder eine Kaliumquelle während des Recyclisierungsschrittes zugesetzt werden.

## Revendications

1. Procédé pour la production d'engrais granulés contenant du phosphate de diammonium, le procédé comprenant le traitement de l'acide phosphorique par de l'ammoniac ("ammoniation") dans un réacteur tubulaire situé dans un sécheur, procédé caractérisé en ce que la totalité de l'acide phosphorique et la quasi-totalité de l'ammoniac sont introduits par l'intermédiaire d'un réacteur tubulaire pour alimenter le sécheur, et en ce que le rapport entre le poids en kilogrammes de la matière recyclée et le poids en kilogrammes du produit, qui est le rapport ou taux de recyclage, est inférieur à 3:1.

2. Procédé selon la revendication 1, caractérisé en ce que la concentration de l'acide phosphorique se situe entre 36 et 50 % de P₂O₅ et en ce que le rapport entre l'ammoniac et l'acide phosphorique aboutit à ce que le phosphate d'ammonium sortant du réacteur tubulaire présente un rapport molaire N:P compris entre 1,6 et 2,0:1.

3. Procédé selon la revendication 1, dans lequel de la vapeur d'eau est ajoutée au granulateur pour agglomérer partiellement les particules recyclées.

4. Procédé selon la revendication 1, caractérisé en ce que de faibles quantités d'acide sulfurique et d'ammoniac sont introduites dans le granulateur, de façon connue en soi, pour maîtriser la composition analytique du produit final.

5. Procédé selon la revendication 1, caractérisé en ce qu'on met le procédé en oeuvre dans un appareil combiné, granulateur et sécheur, comprenant un réacteur tubulaire pour faire réagir l'ammoniac et l'acide phosphorique en phosphate de diammonium.

6. Procédé selon la revendication 1, caractérisé en ce qu'on fournit de l'urée et/ou une source de potassium au cours d'une étape de recyclage.
